**Europäisches Patentamt**

**European Patent Office**

**Office européen des brevets**

(19)

(11) Veröffentlichungsnummer: **0 215 450 B1**

## (12) EUROPÄISCHE PATENTSCHRIFT

(45) Veröffentlichungstag der Patentschrift: **10.04.91**

(51) Int. Cl.⁵: **H02K 1/28**

(21) Anmeldenummer: **86112621.7**

(22) Anmeldetag: **12.09.86**

(54) **Rotor für Elektro-Kleinmotoren.**

(30) Priorität: **17.09.85 DE 8526565 U**

(43) Veröffentlichungstag der Anmeldung:
**25.03.87 Patentblatt 87/13**

(45) Bekanntmachung des Hinweises auf die
Patenterteilung:
**10.04.91 Patentblatt 91/15**

(84) Benannte Vertragsstaaten:
**DE FR GB IT**

(56) Entgegenhaltungen:
**EP-A- 0 106 383**
**DE-U- 6 947 050**
**US-A- 4 472 650**

(73) Patentinhaber: **DIEHL GMBH & CO.**
**Stephanstrasse 49**
**W-8500 Nürnberg(DE)**

(72) Erfinder: **Schwartz, Georg**
**Am Steig 3**
**W-8500 Nürnberg(DE)**

(74) Vertreter: **Hofmann, Gerhard, Dipl.-Ing. Paten-**
**tassessor et al**
**Stephanstrasse 49**
**W-8500 Nürnberg(DE)**

## Beschreibung

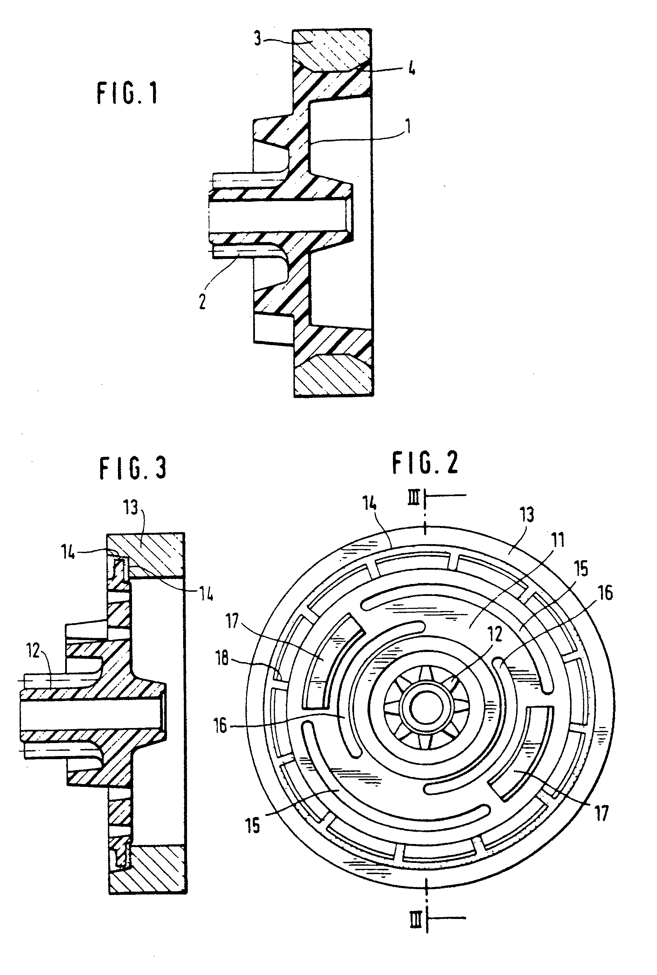

Die Erfindung bezieht sich auf einen Rotor für Elektro-Kleinmotoren mit einem Ringmagnet aus permanentmagnetischem Material mit aufmagnetisierten Magnetpolen und einem Trägerteil aus Kunststoff, welches mit dem Ringmagnet verklebt ist und diesen mit einem Abtriebsritzel auf der Rotormittelachse verbindet. Siehe DE-U-6947050. Elektro-Kleinmotoren mit einem Rotor der eingangs genannten Art bringt die Anmelderin seit Jahren in großen Stückzahlen auf den Markt. Bei diesen Rotoren, siehe Fig. 1 der Zeichnung, ist das Trägerteil aus Kunststoff mit dem Ringmagneten an dessen Innenumfang über die volle Breite verklebt. Eine derartige Verklebung ist haltbar, solange der Ausdehnungskoeffizient des Magnetmaterials und des Kunststoffs der Trägerplatte bei höheren Temperaturen sowie beim Abkühlen nach dem Spritzvorgang des Trägerteils in etwa gleich sind. Bei der Verwendung eines neuen Magnetmaterials aus Sinterkeramik ist jedoch die bisherige Ausbildung von Trägerteil und Ringmagnet wegen der unterschiedlichen Ausdehnungskoeffizienten beider Materialien nicht mehr möglich. Es käme zum Reißen des Kunststoffträgerteils vom Ringmagnet nach dem Abkühlen vom Spritzvorgang.

Es ist Aufgabe der Erfindung, eine Ausgestaltung des Rotors aufzuzeigen, bei welcher die unterschiedlichen Ausdehnungskoeffizienten der Materialien von Trägerteil und Ringmagnet keinen Einfluß auf die Klebeverbindung zwischen beiden Bauteilen hat.

Gemäß der Erfindung wird daher vorgeschlagen, daß das Trägerteil Aussparungen aufweist, derart, daß zwischen dem Abtriebsritzel und dem Ringmagnet keine radial durchgängige Materialverbindung besteht.

Durch diese Ausbildung erhält das Trägerteil in sich in begrenztem Maße ein federndes Verhalten und kann somit ohne besondere Beanspruchung der Klebestellen unterschiedliche Materialausdehnungen von Trägerteil und Ringmagnet ausgleichen.

In bevorzugter Weiterbildung der Erfindung ist vorgesehen, daß die Aussparungen als kreisringförmige Schlitze ausgebildet sind, welche konzentrisch und in Drehrichtung des Rotors gegeneinander versetzt auf dem Trägerteil angebracht sind.

Noch weitere Ausbildungen der Erfindung sind in den Unteransprüchen erläutert.

Im folgenden soll die Erfindung anhand der Zeichnung an einem Ausführungsbeispiel erläutert werden.

Es zeigen:

Fig. 1    einen Rotor im Schnitt entsprechend dem Stand der Technik,

Fig. 2    einen Rotor gemäß der Erfindung in Draufsicht,

Fig. 3    einen Rotor nach Fig. 2 im Schnitt entlang der Schnittlinie III-III.

Bei dem bekannten Rotor ist ein Trägerteil 1 aus Kunststoff einstückig mit einem Abtriebsritzel 2 aus einem thermoplastischen Kunststoff hergestellt. Dieses Trägerteil ist im Bereich seiner Umfangslinie mit einem ringförmigen Permanentmagneten 3 aus Bariumferrit-Material entlang der Linie 4 verklebt. Diese Klebeverbindung ist ausreichend bei etwa gleichem Ausdehnungskoeffizienten von Ringmagnet und Trägerteil bei verschiedenen Temperaturen.

In den Figuren 2 und 3 ist die Ausgestaltung eines Rotors entsprechend der Erfindung dargestellt, bei welcher die Verklebung von Trägerteil und Ringmagnet bei Temperaturänderungen nicht mehr zu einer übermäßigen Beanspruchung der Verklebung beider Bauteile und damit zu einem partiellen Abreißen des Trägerteils von dem Ringmagneten führt. Ein solches partielles Abreißen würde den Rundlauf des Rotors beeinträchtigen und zu einer Geräuschentwicklung beim Lauf, im ungünstigsten Falle zu einem Ausfall des Motors führen.

Mit 11 ist in den Figuren 2 und 3 das Trägerteil aus einem thermoplastischen Kunststoff bezeichnet, welches einstückig mit einem Abtriebsritzel 12 hergestellt wird. Ein Ringmagnet 13 aus permanentmagnetischem Material ist an seinem Umfang mit aufmagnetisierten Magnetpolen, je 12 Nord- und Südpolen, versehen. Dieser Ringmagnet 13 ist entlang der Linie 14 mit dem Trägerteil 11 verklebt. Die Ausbildung ist dabei so getroffen, daß das Trägerteil im Bereich seines Außenumfanges voll mit Klebstoff umgeben ist und an keiner Stelle an dem Ringmagneten an- oder aufliegt. In dem Trägerteil 11 sind kreisringförmige Schlitze 15 und 16 auf verschiedenen konzentrischen Kreisen zur Rotormittelachse angebracht. Diese kreisringförmigen Schlitze überdecken einander in radialer Richtung, so daß von der Rotormittelachse aus gesehen keine durchgängige Materialverbindung zu dem Ringmagneten besteht.

Es ist im Sinne der Erfindung natürlich auch möglich, die Aussparungen in geometrisch anderer Art auszugestalten. Wesentlich dabei ist nur, daß die Aussparungen ein ausreichendes federndes Verhalten des Trägerteils 11 ermöglichen und daß dieses federnde Verhalten nicht durch durchgängige, radiale Materialstege zwischen Abtriebsritzel und Ringmagnet gestört wird.

Mit 17 sind Nocken bezeichnet, welche im Zusammenwirken mit einem nicht dargestellten Hebel eine Rücklaufsperre bilden. Mit 18 sind schließlich Schlitze im Trägerteil 11 bezeichnet, welche sich beim Klebevorgang mit Klebstoff füllen und eine bessere Verbindung zwischen Trägerteil 11 und Ringmagneten gewährleisten.

## Ansprüche

1. Rotor für Elektro-Kleinmotoren mit einem Ringmagnet (13) aus permanentmagnetischem Material mit aufmagnetisierten Magnetpolen (12) und einem Trägerteil (11) aus Kunststoff, welches mit dem Ringmagnet (13) verklebt ist und diesen mit einem Abtriebsritzel (12) auf der Rotormittelachse verbindet, dadurch gekennzeichnet, daß das Trägerteil (11) Aussparungen (15, 16) aufweist, derart, daß zwischen dem Abtriebsritzel (12) und dem Ringmagnet (13) keine radial durchgängige Materialverbindung besteht.

2. Rotor nach Anspruch 1, dadurch gekennzeichnet, daß die Aussparungen (15, 16) als kreisringförmige Schlitze ausgebildet sind, welche konzentrisch und in Drehrichtung des Rotors gegeneinander versetzt auf dem Trägerteil (11) angebracht sind.

3. Rotor nach Anspruch 1 oder 2, dadurch gekennzeichnet, daß das Trägerteil (11) an seinem Umfang im Bereich der Verklebung (14) mit dem Ringmagneten (13) radiale Ausnehmungen (18) aufweist.

4. Rotor nach Anspruch 1, dadurch gekennzeichnet, daß Trägerteil (11 ) und Abtriebsritzel (12) einstückig aus thermoplastischem Kunststoff hergestellt sind.

## Claims

1. A rotor for small electric motors with a ring magnet (13) made of permanent-magnetic material for magnetized magnetic poles ( - ) and a carrier part (11) made of plastics material, which is bonded to the ring magnet (13) and connects this to the power-take-off pinion on the rotor central axis, characterised in that the carrier part (11) has recesses (15, 16) in such a way that no radially extending material connection exists between the power-take-off pinion (12) and the ring magnet (13).

2. A rotor according to claim 1, characterised in that the recesses (15, 16) are designed as circular-ringshaped slots which are positioned concentrically and mutually offset in the direction of rotation of the rotor on the carrier part (11).

3. A rotor according to claim 1 or 2, characterised in that the carrier part (11) has radial recesses (18) on its circumference in the region of the bonding (14) with the ring magnets (13).

4. A rotor according to claim 1, characterised in that the carrier part (11) and the power-take-off pinion (12) are produced in one piece from thermoplastic plastic material.

## Revendications

1. Rotor pour petits moteurs électriques, comprenant un aimant annulaire (13) en matériau à magnétisme permanent, présentant des pôles magnétisés, et une partie support(11) en matière plastique qui est collée à l'aimant annulaire (13) et le relie à un pignon d'entraînement (12) situé sur l'axe du rotor, caractérisé en ce que la partie support (11) présente des évidements (15,16) de façon qu'il n'y ait aucune liaison radiale continue par le matériau entre le pignon d'entraînement (12) et l'aimant annulaire (13).

2. Rotor selon la revendication 1, caractérisé en ce que les évidements (15,16) sont réalisés sous forme de fentes en forme d'anneaux de cercle qui sont ménagées sur la partie support (11), concentriquement et décalées les unes par rapport aux autres dans le sens de rotation du rotor.

3. Rotor selon la revendication 1 ou 2, caractérisé en ce que la partie support (11) présente des évidements radiaux (18) sur sa périphérie, dans la zone du collage (14) à l'aimant annulaire (13).

4. Rotor selon la revendication 1, caractérisé en ce que la partie support (11) et le pignon d'entraînement (12) sont fabriqués d'une seule pièce en matière synthétique thermoplastique.

EP 0 215 450 B1

FIG.1

FIG.3

FIG.2

4